# EUROPÄISCHE PATENTANMELDUNG

(11) **EP 3 744 485 A1**
(43) Veröffentlichungstag der Anmeldung: **02.12.2020**
(21) Anmeldenummer: 19176784.7
(22) Anmeldetag: 27.05.2019
(51) Int. Cl.: B25J 15/00, B25J 15/02

(54) **FELGENGREIFER**

(71) Anmelder: Pflüger Präzision GmbH, 71665 Enzweihingen (DE)
(72) Erfinder: BUTZ, Peter, 75428 Illingen (DE)
(74) Vertreter: Witte, Weller & Partner Patentanwälte mbB

(57) **Zusammenfassung**

Es wird ein Felgengreifer mit einem Basiskörper (11) angegeben, an dem eine Aufnahme (12) zur Befestigung an einer Handhabungseinrichtung, wie etwa einem Roboterarm, ausgebildet ist, wobei am Basiskörper (11) ein erstes Felgengreifermodul (14) und ein zweites Felgengreifermodul (16) aufgenommen sind, und wobei an jedem Felgengreifermodul (14, 16) ein erster und ein zweiter Ausleger (26, 32) vorgesehen sind, die mittels eines ersten, vorzugsweise elektrischen, Antriebs relativ zueinander verfahrbar sind, wobei an jedem Ausleger (26, 32) ein Haltemodul (30, 32) für eine Felge gehalten ist, und wobei ein zweiter, vorzugsweise elektrischer, Antrieb (46) mit den Felgengreifermodulen (14, 16) gekoppelt ist, womit die Felgengreifermodule (14, 16) relativ zueinander verfahrbar sind.

## Beschreibung

Die Erfindung betrifft einen Felgengreifer mit einem Basiskörper, an dem eine Aufnahme zur Befestigung an einer Handhabungseinrichtung, wie etwa einem Roboterarm, vorgesehen ist, wobei am Basiskörper ein erstes Felgengreifermodul und ein zweites Felgengreifermodul aufgenommen sind, und wobei an jedem Felgengreifermodul ein erster und ein zweiter Ausleger vorgesehen sind, die mittels eines ersten Antriebs entlang des Felgengreifermoduls verfahrbar sind, und wobei an jedem Ausleger ein Haltemodul für eine Felge gehalten ist.

Ein derartiger Felgengreifer ist durch Benutzung bekannt geworden und wird von der Firma Eisenmann Anlagenbau GmbH & Co. KG, Böblingen, vertrieben. Der betreffende Felgengreifer weist einen pneumatischen Antrieb auf und ist für unterschiedliche Radgrößen anpassbar.

Die beiden Felgengreifermodule sind dabei in einem festen Abstand zueinander am Basiskörper befestigt. Mit den beiden Felgengreifermodulen können zwei Felgen gleichzeitig etwa mittels eines Roboters von einem ersten Ort aufgenommen werden und an einem anderen Ort abgelegt werden.

Die jeweiligen Felgengreifermodule sind hierbei jeweils auf eine bestimmte Felgengröße angepasst und in einem entsprechenden Abstand zueinander angeordnet. Außerdem befinden sich die Felgengreifermodule in einer gemeinsamen Ebene.

Nachteilig ist die bekannte Anordnung wegen ihrer fehlenden Flexibilität, wenn unterschiedlich große Felgen gehandhabt werden sollen oder Felgen aufgenommen werden sollen, die sich in einer verkippten Position befinden.

Vor diesem Hintergrund liegt der Erfindung die Aufgabe zugrunde, einen Felgengreifer zu offenbaren, der eine erhöhte Flexibilität aufweist.

Diese Aufgabe wird durch einen Felgengreifer mit einem Basiskörper gelöst, an dem eine Aufnahme zur Befestigung an einer Handhabungseinrichtung, wie etwa einem Roboterarm, ausgebildet ist, wobei am Basiskörper ein erstes Felgengreifermodul und ein zweites Felgengreifermodul aufgenommen sind, und wobei an jedem Felgengreifermodul ein erster und ein zweiter Ausleger vorgesehen sind, die mittels eines ersten Antriebs entlang des Felgengreifermoduls verfahrbar sind, und wobei an jedem Ausleger ein Haltemodul für eine Felge gehalten ist, und wobei ein zweiter, vorzugsweise elektrischer, Antrieb mit den Felgengreifermodulen gekoppelt ist, womit die Felgengreifermodule relativ zueinander verfahrbar sind.

Da beide Felgengreifermodule relativ zueinander verfahrbar sind, können unterschiedlich große Felgengreifermodule auf einfache Weise gehandhabt werden. Dabei ist es möglich, gleichzeitig zwei Felgen von einer ersten Arbeitsstation aufzunehmen, die für eine erste Felgengröße, z.B. 600 Millimeter Durchmesser, ausgebildet ist und - ggf. während der Übergabe - zu einer zweiten Arbeitsstation, die für einen anderen Felgendurchmesser, z.B. 700 Millimeter Durchmesser, ausgebildet ist, relativ zueinander zu verfahren, und dann an die zweite Arbeitsstation zu übergeben.

Dadurch ergibt sich erfindungsgemäß eine deutlich erhöhte Flexibilität. Bei unterschiedlichen Arbeitsstationen, die für unterschiedliche Felgengrößen angepasst sind, kann eine zusätzliche Handhabungseinrichtung eingespart werden, die bislang in solchen Fällen erforderlich war.

Gemäß einer weiteren Ausgestaltung der Erfindung weist jedes Felgengreifermodul einen Grundkörper auf, an dem die Ausleger verfahrbar aufgenommen sind, wobei der Grundkörper verschwenkbar an einem Zwischenkörper aufgenommen ist, der mittels des zweiten Antriebs verfahrbar am Basiskörper aufgenommen ist.

Auf diese Weise sind die Felgengreifermodule nicht nur im Abstand zueinander verfahrbar, sondern zusätzlich um einen gewissen Betrag gegenüber einer gemeinsamen Ebene verschwenkbar, die durch den Basiskörper vorgegeben ist.

Auf diese Weise ist es möglich, auch Felgen, die sich in einer gegenüber einer Normallage verkippten Lage befinden, mittels des Felgengreifers korrekt aufzunehmen und an einer anderen Arbeitsstation oder einem anderen Ort neu ausgerichtet zu übergeben bzw. abzulegen. Dabei kann die Ausrichtung ggf. während des Verfahrens des Felgengreifers zwischen der Anfangs- und der Ausgangsposition erfolgen.

Dadurch ergibt sich eine zusätzliche Flexibilität des Felgengreifers, der auf diese Weise an die unterschiedlichsten Konfigurationen anpassbar ist.

Während im Stand der Technik bekannte Felgengreifer typischerweise pneumatisch angetrieben sind, ist der erfindungsgemäße Felgengreifer vorzugsweise elektrisch angetrieben.

Hierdurch wird eine Gewichtsersparnis erzielt. Außerdem kann eine sonst notwendige automatische Bremse vermieden werden. Auch ist eine aufwändige Pneumatikversorgung, die zu hohen Kosten führt, nicht erforderlich.

Für Einzelheiten des Aufbaus jedes Felgengreifermoduls wird in diesem Zusammenhang auf die (noch nicht offengelegte) europäische Patentanmeldung 19163039.2 verwiesen, deren Offenbarung hier vollständig durch Bezugnahme eingeschlossen wird.

Gemäß einer weiteren Ausgestaltung der Erfindung sind die Felgengreifermodule unabhängig voneinander relativ zum Basiskörper verschwenkbar.

Dadurch wird die Flexibilität zusätzlich erhöht.

Gemäß einer weiteren Ausgestaltung der Erfindung weist der Basiskörper eine zentrale, flanschförmige Aufnahme auf, von der aus vier Arme nach außen hin hervorstehen, wobei an jeweils zwei Enden davon das erste und das zweite Felgengreifermodul aufgenommen sind.

Hierdurch ergibt sich ein einfacher und kompakter Aufbau.

Gemäß einer weiteren Ausgestaltung der Erfindung weist der zweite Antrieb einen Spindeltrieb auf.

Vorzugsweise weist hierbei der Spindeltrieb eine elektrisch drehbar antreibbare Gewindespindel auf, die über Spindelmuttern an die Felgengreifermodule gekoppelt ist.

Dies ist eine besonders einfache und zuverlässige Antriebsmöglichkeit.

Gemäß einer Weiterbildung dieser Ausführung weist die Gewindespindel einen ersten Spindelabschnitt mit einem Rechtsgewinde auf, der mit dem einen Felgengreifermodul gekoppelt ist, sowie einen zweiten Spindelabschnitt mit einem Linksgewinde, der mit dem anderen Felgengreifermodul gekoppelt ist.

Auf diese Weise können die beiden Felgengreifermodule synchron aufeinander zu- oder voneinander wegbewegt werden, je nachdem in welche Richtung die Gewindespindel gedreht wird. Die Gewindespindel kann hierbei etwa als Trapezgewindespindel mit einem Rechts- und mit einem Linksgewinde ausgeführt sein.

Gemäß einer weiteren Ausgestaltung der Erfindung sind die beiden Felgengreifermodule jeweils über mindestens eine Linearführung mit dem Basiskörper gekoppelt.

Auf diese Weise wird eine sichere Führung der Felgengreifermodule am Basiskörper gewährleistet.

Hierbei kann jede Linearführung etwa eine Führungsschiene aufweisen, die zwischen Führungsrollen geführt ist.

Dabei können die Felgengreifermodule jeweils einen Zwischenkörper aufweisen, der mittels der mindestens einen Linearführung am Basiskörper verfahrbar gehalten ist.

Gemäß einer weiteren Ausgestaltung der Erfindung ist an jedem Felgengreifermodul ein länglicher Grundkörper vorgesehen, an dem mindestens eine sich parallel zu einer Längsrichtung des Grundkörpers erstreckende Linearführung aufgenommen ist.

Auf diese Weise können die Ausleger entlang des länglichen Grundkörpers verfahren werden, um so eine Felge ergreifen zu können oder freigeben zu können.

Gemäß einer Weiterbildung dieser Ausführung sind die beiden Ausleger entlang des länglichen Grundkörpers unabhängig voneinander verfahrbar aufgenommen.

Auf diese Weise ist es zusätzlich ermöglicht, eine Felge auch in Richtung des Grundkörpers zu verfahren, wenn dieser einmal aufgenommen ist, um so eine bessere Anpassung zwischen unterschiedlichen Bearbeitungsstationen zu ermöglichen.

Der erste Antrieb ist gemäß einer weiteren Ausgestaltung der Erfindung als Zahnstangenantrieb ausgebildet.

Auf diese Weise kann der zugeordnete Ausleger relativ schnell über eine größere Strecke verfahren werden.

Hierbei kann der Zahnstangenantrieb etwa eine Zahnstange und ein elektrisch antreibbares Ritzel aufweisen.

Es versteht sich, dass nicht nur zwei Felgengreifermodule an einem Felgengreifer vorgesehen sein können, sondern dass stattdessen auch vier, sechs, acht usw. Felgengreifermodule an einem Felgengreifer aufgenommen sein können.

Es versteht sich ferner, dass die vorstehend genannten und die nachstehend noch zu erläuternden Merkmale der Erfindung nicht nur in der jeweils angegebenen Kombination, sondern auch in anderen Kombinationen oder in Alleinstellung verwendbar sind, ohne den Rahmen der Erfindung zu verlassen.

Weitere Merkmale und Vorteile der Erfindung ergeben sich aus der nachfolgenden Beschreibung bevorzugter Ausführungsbeispiele unter Bezugnahme auf die Zeichnungen. Es zeigen:
- Fig. 1: eine perspektivische Gesamtansicht des erfindungsgemäßen Felgengreifers von schräg oben, aus einer ersten Richtung gesehen;
- Fig. 2: eine perspektivische Gesamtansicht des Felgengreifers gemäß Fig. 1 schräg von unten aus gesehen;
- Fig. 3: eine perspektivische Gesamtansicht des Felgengreifers gemäß Fig. 2, schräg von unten aus gesehen, jedoch aus gegenüber Fig. 2 leicht veränderten Perspektive; und
- Fig. 4: eine perspektivische Gesamtansicht des erfindungsgemäßen Felgengreifers ähnlich zu Fig. 1, von schräg oben aus gesehen, jedoch aus einer veränderten Perspektive.

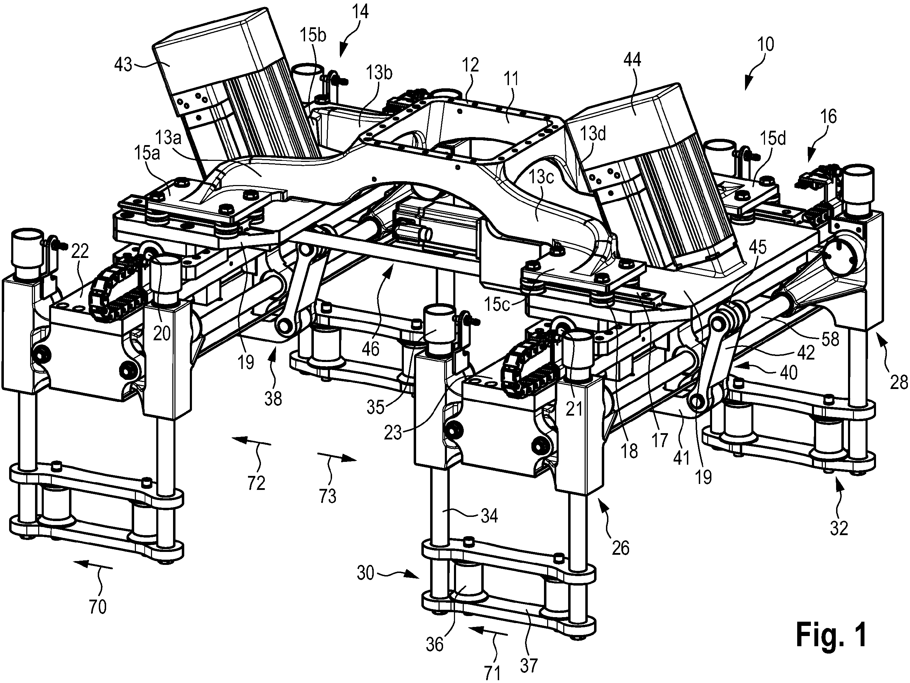

Ein erfindungsgemäßer Felgengreifer ist perspektivisch in Fig. 1 dargestellt und insgesamt mit der Ziffer 10 bezeichnet.

Der Felgengreifer 10 weist zwei Felgengreifermodule 14, 16 auf, die an einem gemeinsamen Basiskörper 11 gehalten sind.

Der Basiskörper 11 weist eine grundsätzlich quadratische, flanschförmige Aufnahme 12 auf, die zur Verbindung mit einer zugeordneten Handhabungseinrichtung, wie etwa einem Roboter, dient. Von der Aufnahme 12 aus erstreckt sich der Basiskörper 11 mit insgesamt vier Armen 13a, 13b, 13c, 13d, die von den Ecken der quadratischen Aufnahme 12 aus nach außen hin hervorstehen.

An jeweils zwei zugeordneten Enden 15a, 15b bzw. 15c, 15d der Arme 13a, 13b bzw. 13c, 13d, befinden sich ebene Aufnahmeplatten, an denen die beiden Felgengreifermodule 14 bzw. 16 über Linearführungen 17, 18 aufgenommen sind.

Die beiden Felgengreifermodule 14, 16 sind grundsätzlich identisch aufgebaut. Daher werden für entsprechende Teile der beiden Felgengreifermodule 14, 16 teilweise dieselben Bezugsziffern verwendet.

Jedes Felgengreifermodul 14, 16 ist an einem Zwischenkörper 19 gehalten, der an den jeweils zugeordneten Enden 15a, 15b bzw. 15c, 15d verfahrbar gehalten ist. Hierbei ist der Zwischenkörper 19 eines jeden Felgengreifermoduls 14, 16 jeweils mittels einer Führungsschiene 17, die zwischen vier zugeordneten Führungsrollen 18 geführt ist, am Basiskörper 11 geführt.

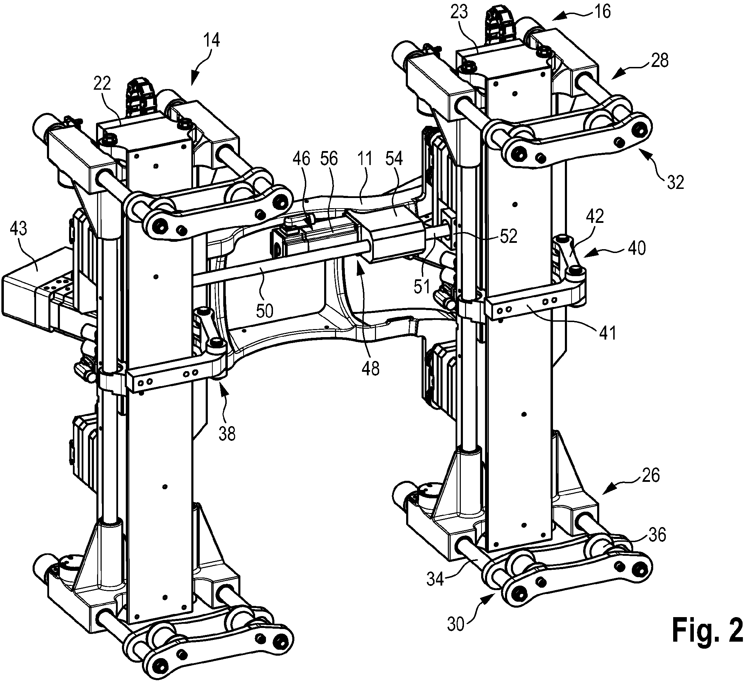

Ein insgesamt mit 46 bezeichneter Antrieb, der nachfolgend anhand von Fig. 2 näher erläutert wird, dient dazu, die beiden Felgengreifermodule 14, 16 relativ zueinander zu verfahren, diese also entweder synchron aufeinanderzu zu bewegen oder synchron voneinanderweg zu bewegen (vgl. Pfeile 72, 73 gemäß Fig. 1).

Die Felgengreifermodule 14, 16 weisen ferner jeweils einen Grundkörper 22, 23 auf, an dem zwei in Längsrichtung des Grundkörpers 22, 23 verfahrbare Ausleger 26, 28 gehalten sind. Die Ausleger 26, 28 weisen über Vertikalführungen 34 gehaltene Haltemodule 30 bzw. 32 auf, an denen Rollen 36 zur Kontaktierung einer Felge drehbar gehalten sind.

Eine Felge kann also zwischen vier Rollen 36, von denen jeweils zwei an einem Haltemodul 30, 32 vorgesehen sind, gehalten werden.

Die Haltemodule 30, 32 können unter Schwerkrafteinfluss mittels Vertikalführungen 34 an den Auslegern 26, 28 nach unten ausfahren, wobei die Vertikalposition über Sensoren 35 erfasst werden kann.

Außerdem können die Vertikalführungen 34 mittels einer magnetischen Arretierung (nicht dargestellt) an den Haltemodulen 30, 32 in einer vorgegebenen Position arretiert werden.

Ferner kann jedes Felgengreifermodul 14, 16 in Bezug auf den Basiskörper um einen gewissen Betrag verschwenkt werden, wie durch die beiden Pfeile 70, 71 in Fig. 1 angedeutet ist. Hierzu ist jedes Felgengreifermodul 14, 16 an einer Schwenkachse 20 bzw. 21 an dem Zwischenkörper 19 eines Felgengreifermoduls 14 bzw. 16 verschwenkbar gehalten.

Zum Verschwenken ist an jedem Felgengreifermodul 14, 16 ein Schwenkmechanismus 40 vorgesehen, der über einen zugeordneten Schwenkantrieb 43 bzw. 44 antreibbar ist.

Während der Grundkörper 22, 23 eines jeden Felgengreifermoduls 14, 16 einerseits an der Schwenkachse 20, 21 an dem Zwischenkörper 19 gehalten ist, ist der Grundkörper 22, 23 andererseits mittels des Schwenkmechanismus 40 jeweils mit einem ersten Schwenkhebel 41, der fest mit dem Grundkörper 22, 23 verbunden ist, über einen damit gelenkig verbundenen Schwenkhebel 42 um die Schwenkachse 20, 21 verschwenkbar. Der Schwenkhebel 42 wird von einem zugeordneten Hubzylinder 45 des Schwenkantriebs 43 bzw. 44 bewegt.

Aus Fig. 2 sind verschiedene Details des Schwenkmechanismus 40 zum Verschwenken der beiden Felgengreifermodule 14, 16 und des Antriebs 46 zum linearen Verfahren der Felgengreifermodule 14, 16 erkennbar.

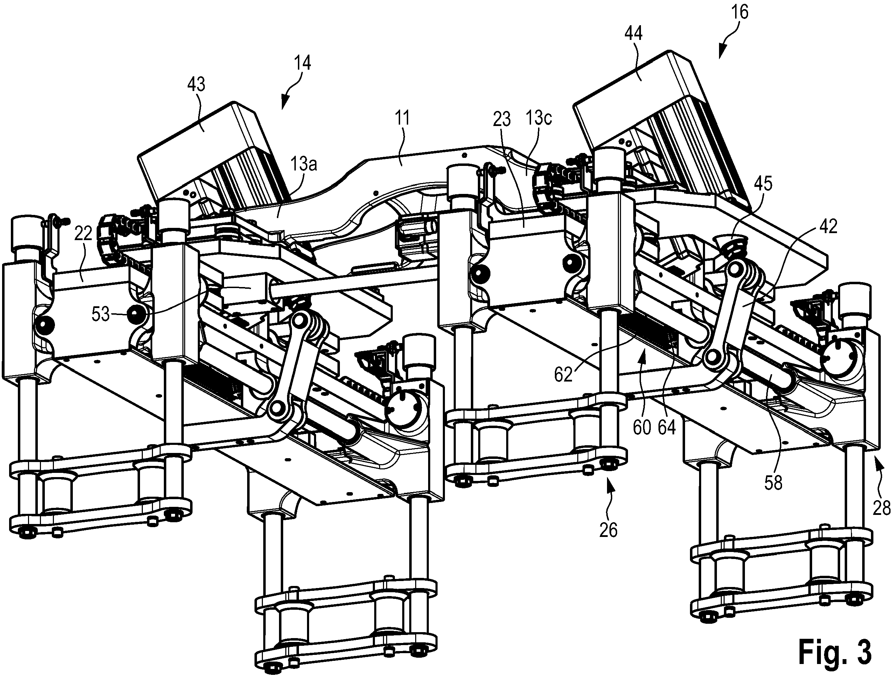

Der Antrieb 46 zum Verfahren der Felgengreifermodule 14, 16 relativ zueinander weist einen Spindeltrieb 48 mit einer Zahnstange auf, die mittels eines Spindelantriebs 54 über einen elektrischen Antriebsmotor 56 verdreht werden kann. Die Spindelstange weist einen ersten Spindelabschnitt 50 mit einem Rechtsgewinde auf, der mit einer Spindelmutter am ersten Felgengreifermodul 14 zusammenwirkt (vgl. Spindelmutter 53 gemäß Fig. 3). Ein zweiter Spindelabschnitt 51 ist mit einem Linksgewinde versehen und wirkt mit einer Spindelmutter 52 am zweiten Felgengreifermodul 16 zusammen. Die Spindelmuttern 52, 53 sind jeweils fest an den Grundkörpern 22, 23 der Felgengreifermodule 14, 16 aufgenommen.

In Abhängigkeit von der Drehrichtung des Spindeltriebs 48 bewegen sich somit die beiden Felgengreifermodule 14, 16 entweder aufeinander zu oder voneinander weg, und zwar in synchroner Bewegung. Bei den Spindelabschnitten 50, 51 kann es sich bspw. um Trapezgewinde handeln.

Aus Fig. 2 ist ferner ersichtlich, wie jeweils ein fester Schwenkhebel 41 an der Unterseite des jeweiligen Grundkörpers 22 bzw. 23 eines Felgengreifermoduls 14, 16 aufgenommen ist. Jeder feste Schwenkhebel 41 ist gelenkig mit einem zweiten, beweglichen Schwenkhebel 42 gekoppelt.

Zur Verschwenkung dient ein jeweils zugeordneter Hubzylinder 45 des zugeordneten Schwenkantriebs 43 bzw. 44.

Durch Ausfahren des Hubzylinders 45 (Fig. 3) lässt sich somit das jeweilige Felgengreifermodul 14 bzw. 16 in Richtung der Pfeile 70, 71 (Fig. 1) verschwenken.

Wie zuvor bereits erwähnt, sind die beiden Ausleger 26, 28 jedes Felgengreifermoduls 14, 16 entlang des Grundkörpers 22, 23 verfahrbar, und zwar unabhängig voneinander. Hierzu ist eine Linearführung 58 vorgesehen (vgl. Fig. 3). Dabei ist jeder Ausleger 26, 28 mittels eines eigenen Zahnstangenantriebs 60 (in Fig. 3 nur einer erkennbar) unabhängig von dem anderen Ausleger entlang des Grundkörpers 22, 23 in Längsrichtung verfahrbar. Jeder Zahnstangenantrieb 60 weist eine Zahnstange 62 und ein zugeordnetes Ritzel 64 auf. Jedes Ritzel 64 ist von einem zugeordneten Elektromotor angetrieben.

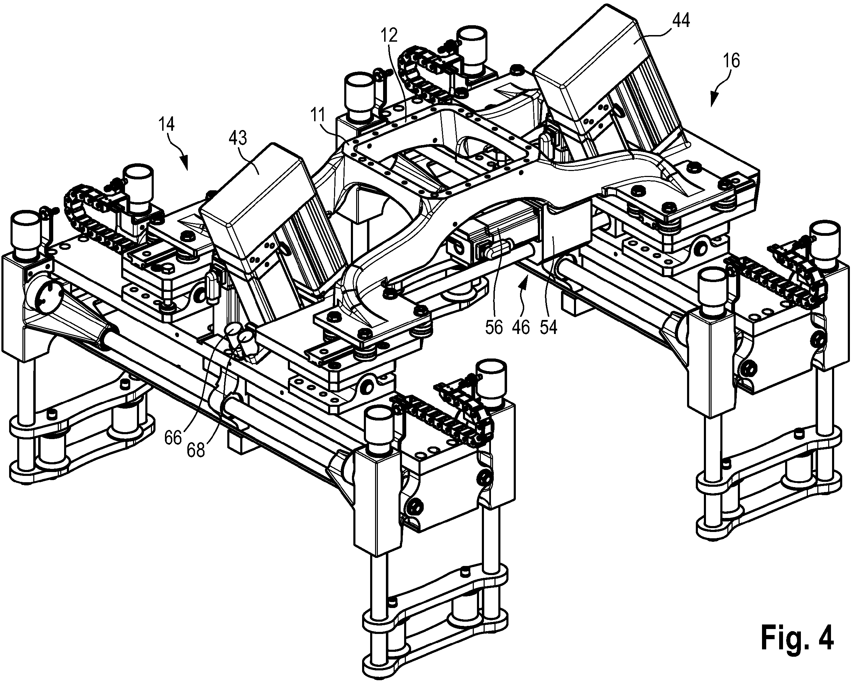

Die zugeordneten Elektromotoren 66, 68 für die beiden Zahnstangenantriebe 60 eines jeweiligen Felgengreifermoduls 14, 16 sind in Fig. 4 erkennbar.

## Patentansprüche

1. Felgengreifer mit einem Basiskörper (11), an dem eine Aufnahme (12) zur Befestigung an einer Handhabungseinrichtung, wie etwa einem Roboterarm, vorgesehen ist, wobei am Basiskörper (11) ein erstes Felgengreifermodul (14) und ein zweites Felgengreifermodul (16) aufgenommen sind, und wobei an jedem Felgengreifermodul (14, 16) ein erster und ein zweiter Ausleger (26, 32) vorgesehen sind, die mittels eines ersten, vorzugsweise elektrischen, Antriebs (60) entlang des Felgengreifermoduls (14, 16) verfahrbar sind, und wobei an jedem Ausleger (26, 32) ein Haltemodul (30, 32) für eine Felge gehalten ist, **dadurch gekennzeichnet, dass** ein zweiter, vorzugsweise elektrischer, Antrieb (46) mit den Felgengreifermodulen (14, 16) gekoppelt ist, womit die Felgengreifermodule (14, 16) relativ zueinander verfahrbar sind.

2. Felgengreifer nach Anspruch 1, **dadurch gekennzeichnet, dass** jedes Felgengreifermodul (14, 16) einen Grundkörper (22, 23) aufweist, an dem die Ausleger (26, 28) verfahrbar aufgenommen sind, und dass der Grundkörper (22, 23) verschwenkbar an einem Zwischenkörper (19) aufgenommen ist, der mittels des zweiten Antriebs (46) verfahrbar am Basiskörper (11) aufgenommen ist.

3. Felgengreifer nach Anspruch 2, **dadurch gekennzeichnet, dass** die Felgengreifermodule (14, 16) unabhängig voneinander relativ zum Basiskörper (11) verschwenkbar sind.

4. Felgengreifer nach einem der vorhergehenden Ansprüche, **dadurch gekennzeichnet, dass** der Basiskörper (11) eine zentrale, flanschförmige Aufnahme (12) aufweist, von der aus vier Arme (13a-13d) nach außen hin hervorstehen, wobei an jeweils zwei Enden (15a, b; 15c, d) davon das erste und das zweite Felgengreifermodul (14, 16) aufgenommen sind.

5. Felgengreifer nach einem der vorhergehenden Ansprüche, **dadurch gekennzeichnet, dass** der zweite Antrieb (46) einen Spindeltrieb (48) aufweist.

6. Felgengreifer nach Anspruch 4, **dadurch gekennzeichnet, dass** der Spindeltrieb (48) eine elektrisch drehbar antreibbare Gewindespindel (48) aufweist, die über Spindelmuttern (52) an die Felgengreifermodule (14, 16) gekoppelt ist.

7. Felgengreifer nach Anspruch 6, **dadurch gekennzeichnet, dass** die Gewindespindel (48) einen ersten Spindelabschnitt (50) mit einem Rechtsgewinde, der mit dem einen Felgengreifermodul (14) gekoppelt ist, sowie einen zweiten Spindelabschnitt (51) mit einem Linksgewinde aufweist, der mit dem anderen Felgengreifermodul (16) gekoppelt ist.

8. Felgengreifer nach einem der vorhergehenden Ansprüche, **dadurch gekennzeichnet, dass** die beiden Felgengreifermodule (14, 16) jeweils über mindestens eine Linearführung (17, 18) mit dem Basiskörper (11) gekoppelt sind.

9. Felgengreifer nach Anspruch 8, **dadurch gekennzeichnet, dass** jede Linearführung (17, 18) eine Führungsschiene (17) aufweist, die zwischen Führungsrollen (18) geführt ist.

10. Felgengreifer nach Anspruch 8 oder 9, **dadurch gekennzeichnet, dass** die Felgengreifermodule (14, 16) jeweils einen Zwischenkörper (19) aufweisen, der mittels der mindestens einen Linearführung (17, 18) am Basiskörper (11) verfahrbar gehalten ist.

11. Felgengreifer nach einem der vorhergehenden Ansprüche, **dadurch gekennzeichnet, dass** an jedem Felgengreifermodul (14, 16) ein länglicher Grundkörper (22, 23) vorgesehen ist, an dem mindestens eine sich parallel zu einer Längsrichtung des Grundkörpers (22, 23) erstreckende Linearführung (58) aufgenommen ist.

12. Felgengreifer nach Anspruch 11, **dadurch gekennzeichnet, dass** die beiden Ausleger (26, 32) entlang des länglichen Grundkörpers (22, 23) unabhängig voneinander verfahrbar aufgenommen sind.

13. Felgengreifer nach einem der vorhergehenden Ansprüche, **dadurch gekennzeichnet, dass** der erste Antrieb als Zahnstangenantrieb (60), ausgebildet ist.

14. Felgengreifer nach Anspruch 13, **dadurch gekennzeichnet, dass** der Zahnstangenantrieb (60) eine Zahnstange (62) und ein elektrisch antreibbares Ritzel (64) aufweist.
